# EUROPEAN PATENT APPLICATION

(11) **EP 1 357 482 A1**
(43) Date of publication of application: **29.10.2003**
(21) Application number: 02008968.6
(22) Date of filing: 22.04.2002
(51) Int. Cl.: G06F 17/30

(54) **Method and device for linking multimedia objects**

(71) Applicant: DEUTSCHE THOMSON-BRANDT GMBH, 78048 Villingen-Schwenningen (DE)
(72) Inventor: Adolph, Dirk, 30952 Ronnenberg (DE); Hörentrup, Jobst, 31141 Hildesheim (DE); Peters, Hartmut, 30890 Barsinghausen (DE); Schiller, Harald, 30539 Hannover (DE); Winter, Marco, 30173 Hannover (DE)
(74) Representative: Thies, Stephan

(57) **Abstract**

The linkage of streams of multimedia objects shall be enabled. Therefore, there is provided a method for linking at least two multimedia objects by providing a first information concerning a first object and a second information concerning a second object. After forming a link descriptor including the first information and the second information it is possible to form a linked multimedia object from the two multimedia objects by interpreting the link descriptor. Since the link descriptor may be a generic one it enables quite flexible linking on the basis of a time scale or location scale.

## Description

The present invention relates to a method for linking at least two multimedia objects. Furthermore, the present invention relates to a device for recording multimedia objects and to a device for retrieving multimedia objects.

### Background

The future of digital recording will be characterised by the preparation, presentation and archiving of added value data services, i.e. a recorder, like a DVR (Digital Video Recorder) for example, will store and handle additional information delivered by content providers like broadcasters or special services or even assembled by the user himself. Added value (metadata) is generated to give further information to the user and to make the essence like picture, audio or video streams available directly by means of a link. For example, added value may be a movie summary explaining the story, listing the actors etc. but also providing a link to the recorded video stream to start its playback if desired. These links designed and usually used within static text pages like a hyperlink for an internet browser, lack for essential abilities required within the linking of streaming audio and video.

Usually a link between metadata and/or essence is a point to point connection. A hyperlink, for example, within a web-page has a character string pointing to a destination, i.e. another web-page by means of an URL (universal resource locator). This URL is selecting a whole web-page however. For files like audio and video streams this corresponds to a solution for a link technique which is selecting the whole destination stream file like a complete movie.

A quite restrictive aspect of known solutions is the missing flexibility when applicable metadata have to be linked to streaming files. If, for example, an onscreen application like a logo or a newsflash text shall be overlaid on the video signal for a time period, this could be done by defining a start time to begin the overlay application and another start time to begin a replacing dummy application. However, such a solution is quite inflexible and might make editing within the stream impossible since the part of the stream that is being linked by the metadata might be changed or removed.

### Invention

An object of the present invention is to provide a method and a device for more flexibly linking multimedia data.

According to the present invention this object is solved by a method for linking at least two multimedia objects by providing a first information concerning a first object, providing a second information concerning a second object, forming a link descriptor including said first information and said second information and forming a linked multimedia object from said at least two multimedia objects by interpreting said link descriptor.

Furthermore, according to the present invention there is provided a device for recording multimedia objects including input means for inputting at least first information concerning a first object and second information concerning a second object, link generating means for generating a link descriptor from said at least first and second information and recording means for recording said first and second objects together with said link descriptor on a recording medium.

Moreover, there is provided a device for retrieving multimedia objects including inputting means for inputting at least first and second multimedia objects together with a link descriptor, link interpreting means for interpreting said link descriptor as linking information concerning said first and second multimedia objects and retrieving means for retrieving said first and second multimedia objects on the basis of said linking information.

In a favourable further development a multimedia object is metadata, essence and/or teletext. The essence may consist of audio and/or video data. Thus, it is possible to link metadata with audio data or video data with teletext etc. Preferably, the first and/or second information includes time range information like start time information and/or end time information. Such start time and end time information may be used to present a background logo for a certain time during a video presentation.

The first and/or second information concerning the first and second objects may also include location range information like coordinates of a start and/or end location. This enables to select a specific display region of a video, i.e. a first object, to be inserted into another video, i.e. the second object.

The link descriptor may be a generic one having a predetermined hierarchically logical structure. Such a generic link descriptor may provide flexible source and destination descriptions for the link. For increasing the flexibility of linking the link descriptor may be formed as a chain link element, i.e. a link element separated and thus independent from the objects which it is linking.

Furthermore, the generic link descriptor may include an extension parameter for including linking data used for future applications.

By specifying an exact range in time, for example, it becomes possible to support all editing tasks executed on streams without the loss of linkage or linked metadata applications. The reason for this is that according to the prior art two objects are linked by combining their data and subsequently encoding the combined data. The encoded data are recorded on a recording medium. Therefore, the original data and the linking information are lost. However, according to the present invention, the original data of the objects concerned are recorded together with linking information, i.e. the chain link element, on the recording medium. The chain link element may be edited individually in order to link the objects according to personal preferences before encoding them. Thus, no information is lost and it is not necessary to record several differently linked versions of objects on a recording medium like in the prior art.

### Drawings

The present invention will now be described in more detail in connection with the attached drawings showing in:
Figure 1 a generic link descriptor providing flexible source and destination descriptions according to the present invention; and
Figures 2A-2C an XML scheme for an advanced link descriptor.

### Exemplary Embodiments

In the following preferred embodiments of the present invention are described.

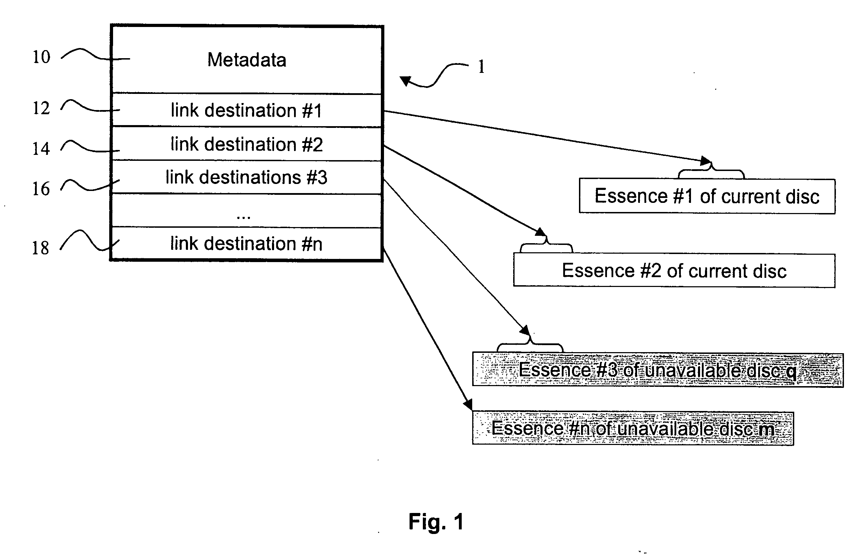

Figure 1 shows a link descriptor 1 including metadata 10 and linking destinations 12, 14, 16 and 18. In the present example the link destination #1 points to an essence #1 of a current disk which is currently inserted in a player. The further link destination #2 with reference number 14 points to an essence #2 of the current disk. Link destination #3 with reference number 16 points to an essence #3 of an unavailable disk q. This means that the link descriptor 1 points to data on a disk q which is currently not inserted into the player so that these data are presently not available. The user may be asked to insert the disk q into the player if he wishes the linkage of essence #3 data with essence #1 and essence #2 data.

Furthermore, link destination #n with reference number 18 points to essence #n which is also stored on an unavailable disk m currently not being in the player.

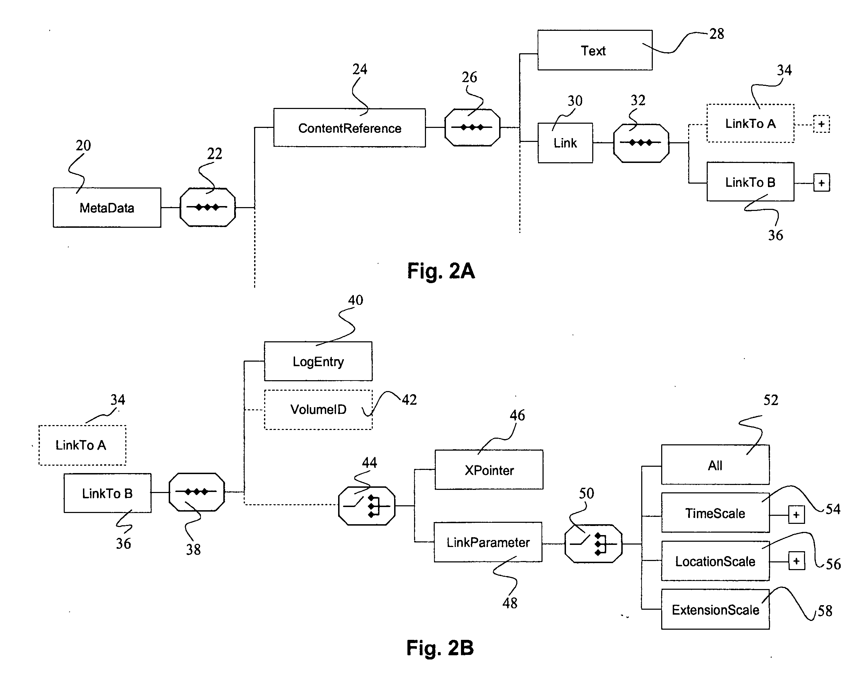

Beside these flexible source and destination descriptions for any links the generic link descriptor optionally also includes a text data unit like a movie summary explaining the story or a listing of the actors, for example (reference number 28 in figure 2A).

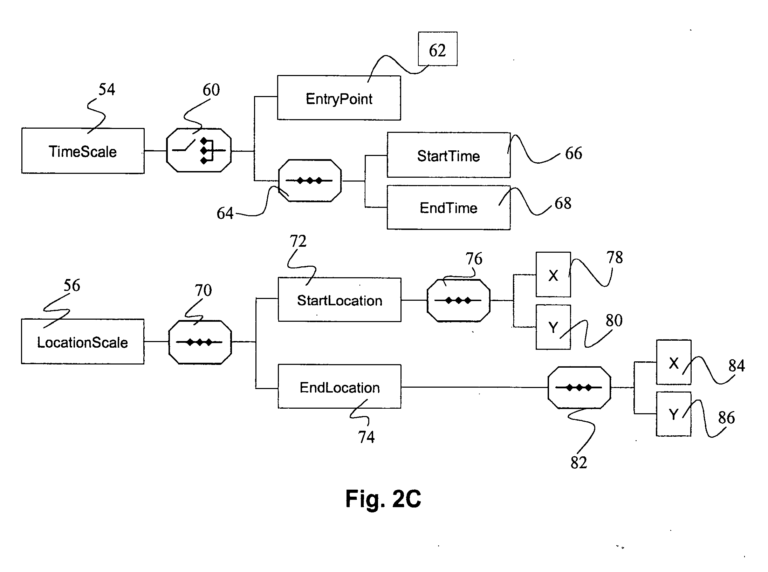

Figure 2 shows an XML scheme for an advanced link descriptor in three parts. This XML scheme can be used for generating or interpreting link descriptors according to the present invention. However, this prerequisites that each link descriptor has a predetermined structure.

Accordingly, metadata 20 is formed of a sequence 22 of data units as shown in Figure 2A. One of these data units may be a content reference 24 pointing to any destination. The content reference 24 may also consist of a sequence 26 of data units. One of these data units may be a text data unit 28.

Another data unit may include link information 30 consisting of a plurality 32 of pointer data LinkTo A 34 and LinkTo B 36. The further structure of the pointers LinkTo A 34 and LinkTo B 36 is shown in Figure 2B which directly follows the structure of Figure 2A as indicated by the "+"-signs. For example, the pointer LinkTo B 36 consists of a sequence 38 of data units like LogEntry 40 and VolumeID 42 as well as an alternative 44 of an XPointer 46 and a LinkParameter 48. The XPointer 46 may point to certain words or paragraphs which have to be linked with video material.

The LinkParameter 48 consists of an alternative 50 of details including the values "All" 52, "TimeScale" 54, "LocationScale" 56 and "ExtensionScale" 58. The value "All" 52 indicates that the whole object of a teletext, metadata or essence is pointed at. The value "ExtensionScale" 58 is provided as a so called hook for future applications. It is reserved for specific data units to be pointed at.

The structure of the "TimeScale" unit and "LocationScale" unit 54 and 56 is shown in Figure 2C in more detail. The TimeScale 54 consists of an alternative 60 of an EntryPoint 62 or a data sequence 64 of a StartTime 66 and an EndTime 68. This means that the linking information only consists of an EntryPoint 62 indicating the starting time for retrieving data of a specific destination until its end. Alternatively, only a temporal range of destination data is chosen by the StartTime 66 and the EndTime 68.

The location scale 56 consists of a sequence 70 of StartLocation 72 and EndLocation 74. The StartLocation 72 includes the sequence 76 of an X-coordinate 78 and a Y-coordinate 80. Similarly, the EndLocation 74 consists of a sequence 82 of an X-coordinate 84 and a Y-coordinate 86.

In the summary, the general idea of the invention is to introduce a generic link descriptor that provides flexible source and destination descriptions for a link. The link descriptor preferably is a chain link element. It is able to specify its source and its destination by a time range. Alternatively, the ends of the links may be specified by a location range (space), i.e. by cutting out the part of a picture and placing it into a destination. By specifying an exact range in time or location it becomes possible to support all editing tasks executed on streams without the loss of linkage or linked metadata applications. Consequently, the linkage of streams is enabled and also the spectrum of features for the linkage between the data and/or essence is enlarged.

## Claims

1. Method for linking at least two multimedia objects by providing a first information (34) concerning a first object,
providing a second information (36) concerning a second object,
forming a link descriptor (30) including said first information (34) and said second information (36) and
forming a linked multimedia object from said at least two multimedia objects by interpreting said link descriptor (30).

2. Method according to claim 1, wherein the multimedia objects are metadata (20), essences and/or teletexts

3. Method according to claim 2, wherein said essences include audio and/or video data.

4. Method according to one of the claims 1 to 3, wherein said first and second information (34, 36) include time range information (54).

5. Method according to claim 4, wherein said time range information (54) includes a start time information (66) and an end time information (68).

6. Method according to one of the claims 1 to 5, wherein said first and second information (34, 36) includes location range information (56).

7. Method according to claim 6, wherein the location range information (56) includes coordinates (78, 80, 84, 86) of a start and/or an end location (72, 74).

8. Method according to one of the claims 1 to 7, wherein the link descriptor is a chain link element (30) having a predetermined hierarchically logical structure.

9. Method according to one of the claims 1 to 8, wherein the chain link element (30) includes an extension parameter (58) for future applications.

10. Device for recording multimedia objects including input means for inputting at least first information (34) concerning a first object and second information (36) concerning a second object,
link generating means for generating a link descriptor (30) from said at least first and second information (34, 36) and recording means for recording said first and second objects together with said link descriptor (30) on a recording medium.

11. Device for retrieving multimedia objects including inputting means for inputting at least first and second multimedia objects together with a link descriptor (30),
link interpreting means for interpreting said link descriptor (30) as linking information concerning said first and second multimedia objects and
retrieving means for retrieving said first and second multimedia objects on the basis of said linking information (30).

12. Device according to claim 10 or 11, further comprising the features of one of the claims 2 to 9.
